# EUROPÄISCHE PATENTSCHRIFT

(11) **EP 0 423 480 B1**
(45) Veröffentlichungstag und Bekanntmachung des Hinweises auf die Patenterteilung: **19.05.1993**
(21) Anmeldenummer: 90117330.2
(22) Anmeldetag: 08.09.1990
(51) Int. Cl.: A47J 36/06

(54) **Abdeckhaube für Teller, Schüsseln, Behälter o.dgl.**
Cover for plates, salad bowls, containers and the like
Couvercle pour assiettes, saladiers, récipients ou analogues

(30) Priorität: 20.10.1989 DE 3934951
(43) Veröffentlichungstag der Anmeldung: 24.04.1991
(73) Patentinhaber: Melitta Haushaltsprodukte GmbH & Co. Kommanditgesellschaft, D-32371 Minden (DE)
(72) Erfinder: Creyaufmüller, Peter, W-4950 Minden (DE); Lutz, Hans-Willi, Dipl.-Volkswirt, W-3063 Krainhagen (DE)
(74) Vertreter: Stracke, Alexander, Dipl.-Ing.

(56) Entgegenhaltungen:
- FR-A- 2 170 869
- GB-A- 926 996

## Beschreibung

Die vorliegende Erfindung betrifft eine kuppelförmig gewölbte, im Grundriß kreisrunde Abdeckhaube für Teller, Schüsseln, Behälter o.dgl..

Im Haushalt werden zum Abdecken von Speisen in Tellern, Schüsseln, Behältern o.dgl. Abdeckhauben, Deckel oder Folien verwendet. Dabei ist es bislang üblich, die entsprechenden Abdeckungen paßgerecht für das jeweilige Behältnis auszulegen. Soweit Folie zur Abdeckung benutzt wird, ist diese im Grunde genommen nur einmal verwendbar.

Für die im Haushalt üblichen, unterschiedlichen Größen von abzudeckenden Behältnissen benötigt man also bislang jeweils entsprechend dimensionierte Abdeckhauben, wobei dies gleichermaßen gilt für die Abdeckung von entsprechenden Behältnissen zum Zwecke der Vorratshaltung wie auch zum Zwecke des Einsatzes in einem Mikrowellenherd, wo das Gargut gegen Flüssigkeitsverlust geschützt werden muß.

Der vorliegenden Erfindung liegt die Aufgabe zugrunde, eine Abdeckhaube der gattungsgemäßen Art (eine derartige Abdeckhaube ist in der GB-A-926,996 beschrieben) zu schaffen, die in der Lage ist, unterschiedlich große Teller, Schüsseln, Behälter o.dgl. ebenso weitestgehend luftdicht abzudecken wie unterschiedlich geformte Behältnisse der genannten Art.

Diese Aufgabe wird erfindungsgemäß dadurch gelöst, daß im konkav gewölbten inneren Bereich in insgesamt vier um jeweils 90° gegeneinander versetzt angeordneten Abschnitten stufigenförmige Absätze gebildet sind, welche in den konkav gewölbten Innenbereich hinein vorstehen und - in der Projektionsebene der Abdeckhaube gesehen - jeweils quadratische Grundflächen zwischen sich einschließen und in ihren jeweiligen mittleren Abschnitten kreisbogenförmige Auswölbungen aufweisen, wobei die Krümmungsradien der Auswölbungen innerhalb der einzelnen Absätze untereinander gleichgroß sind.

Eine derart konzipierte Abdeckhaube ist zur Abdeckung unterschiedlich großer Behältnisse ebenso geeignet wie zur Abdeckung von runden oder im Grundriß quadratischen Behältnissen.

Die Möglichkeit, unterschiedlich große Behältnisse mit der erfindungsgemäßen Abdeckhaube weitestgehend luftdicht abdecken zu können, ergibt sich aus dem Vorhandensein der stufenförmigen Absätze, da je nach Größe des abzudeckenden Behältnisses ein sicheres Aufsetzen im Bereich einer dieser stufenförmigen Absätze der Abdeckhaube immer möglich ist.

Die Möglichkeit, sowohl runde wie auch im Grundriß quadratische Behältnisse abdecken zu können, ergibt sich aus der Gestaltung der besagten Absätze, d.h., da diese Absätze jeweils quadratische Grundflächen zwischen sich einschließen und in ihren mittleren Abschnitten mit kreisbogenförmigen Auswölbungen versehen sind, können sowohl quadratische wie auch runde Behältnisse weitestgehend luftdicht abgedeckt werden.

Die erfindungsgemäße Abdeckhaube kann insoweit durchaus als Universal-Abdeckhaube bezeichnet werden. Zumindest ist es möglich, ein weites Spektrum verschiedenartiger Behältnisse mit einer derartigen Abdeckhaube sicher abzudecken.

Weitere Merkmale der Erfindung sind Gegenstand von Unteransprüchen.

Ein Ausführungsbeispiel der Erfindung ist in den beigefügten Zeichnungen dargestellt und wird im folgenden näher beschrieben. Es zeigen:
- Fig. 1: eine Draufsicht auf eine erfindungsgemäße Abdeckhaube
- Fig. 2: einen Halbschnitt gemäß der Linie II-II in Fig. 1
- Fig. 3: eine Ansicht in Richtung des Pfeiles III in Fig. 2
- Fig. 4: einen gegenüber der Zeichnungslage nach Fig. 2 um 90° versetzten Halbschnitt.

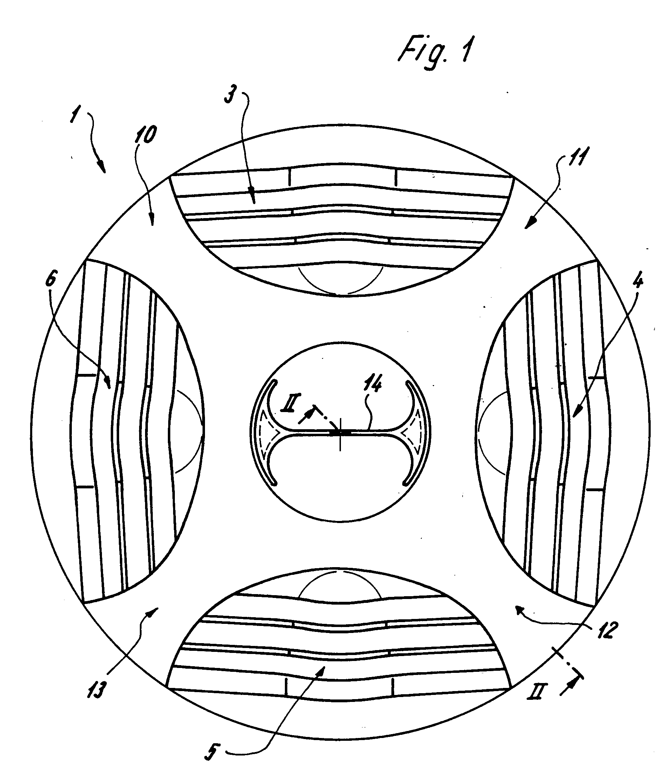

Die in den Fig. 1 bis 4 gezeigte, insgesamt mit dem Bezugszeichen 1 bezeichnete Abdeckhaube für Teller, Schüsseln, Behälter o.dgl., ist in ansich bekannter Weise kuppelförmig gewölbt und weist einen kreisrunden Grundriß auf.

Die Abdeckhaube 1 ist in ihrem konkav gewölbten, inneren Bereich in insgesamt vier Abschnitten, die jweils um 90° gegeneinander versetzt angeordnet sind, mit stufenförmigen Absätzen 2 ausgestattet.

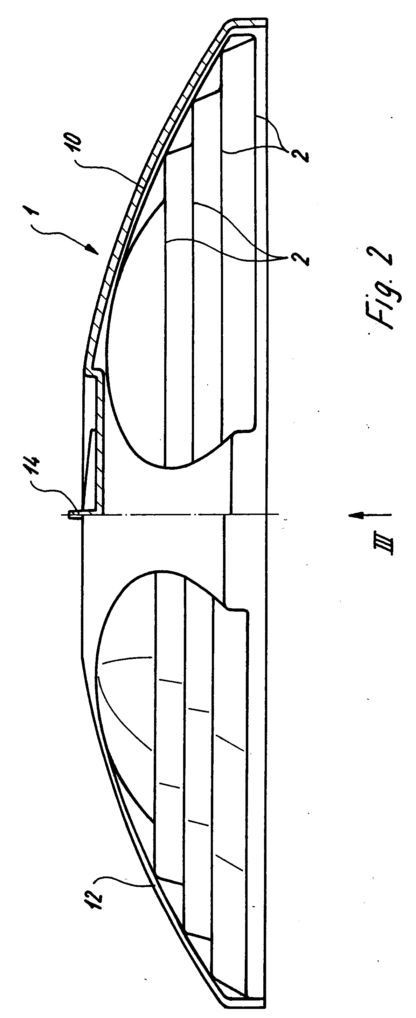

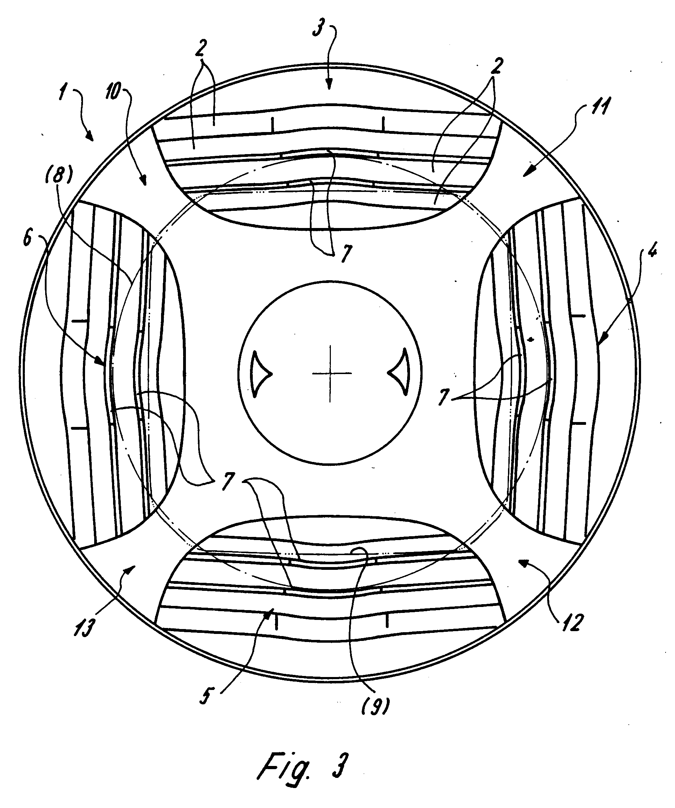

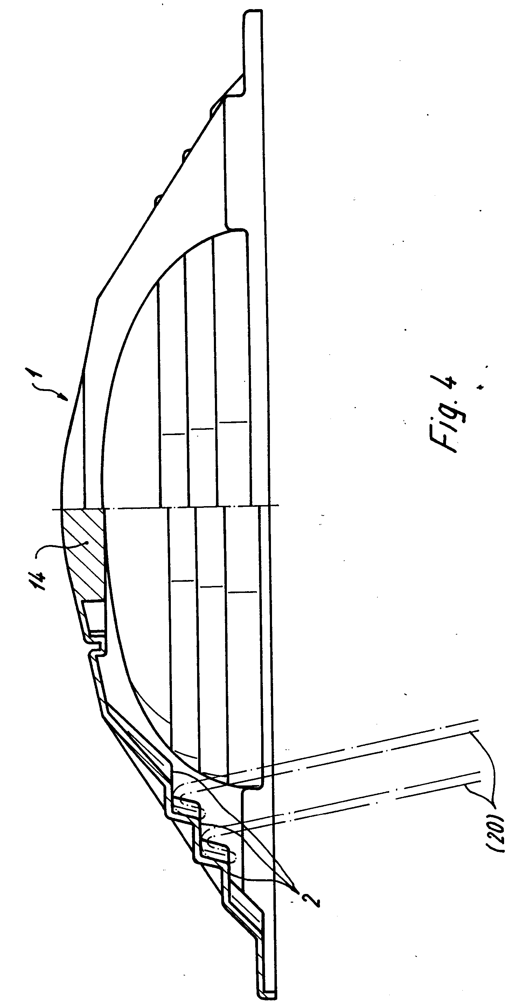

Diese Absätze 2 in den genannten Abschnitten 3 bis 6 stehen in den konkav gewölbten Innenbereich der Abdeckhaube 1 hinein vor, was insbesondere die Fig. 2 und 4 deutlich machen. Aus den Fig. 1 und 3 geht sehr deutlich hervor, daß diese Absätze 2 - in der Projektionsebene der Abdeckhaube 1 gesehen - jeweils quadratische Grundflächen zwischen sich einschließen und in ihren jeweiligen mittleren Abschnitten kreisbogenförmige Auswölbungen 7 aufweisen, wobei die Krümmungsradien dieser Auswölbungen 7 innerhalb der einzelnen Absätze 2 untereinander gleichgroß sind.

Durch diese Gestaltung wird es möglich, sowohl kreisrunde Behälter 8 wie auch viereckige Behälter 9 abzudecken, was durch strichpunktierte Linien in Fig. 3 angedeutet ist.

Durch die Absätze 2 ist darüber hinaus die Abdeckung unterschiedlich großer Behälter 20 möglich, was durch strichpunktierte Linien in Fig. 4 angedeutet ist.

Vorzugsweise ist die Abdeckhaube 1 einstückig aus Kunststoff gefertigt. Dabei kann je nach Anwendungszweck ein durchsichtiger wie auch ein undurchsichtiger Kunststoff verwendet werden.

Wie sich insbesondere aus Fig. 4 ergibt, sind die Absätze 2 unter Beibehaltung der Wandstärke der Abdeckhaube 1 im übrigen durch entsprechende Formgebung - sei es durch Herstellung in einer entsprechend gestalteten Form oder durch Einprägung dieser Absätze - hergestellt.

Wie sich aus den Fig. 1 und 3 ergibt, sind die Abschnitte 3 bis 6, innerhalb derer die besagten Absätze 2 vorgesehen sind, durch unverformte Abschnitte 10 bis 13 voneinander getrennt.

Die Abdeckhaube 1 ist außenseitig und vorzugsweise in ihrem mittleren Bereich mit einer Handhabe 14 versehen, die vorzugsweise ebenfalls einstückig an die Abdeckhaube 1 angeformt ist. Diese Handhabe 14 erleichert sowohl das Aufsetzen der Abdeckhaube auf ein Behältnis wie auch das Abnehmen der Abdeckhaube von einem Behältnis.

Die wie vorstehend beschrieben gestaltete Abdeckhaube 1 kann eine Vielzahl von bislang in einem Haushalt benötigten Abdeckhauben ersetzen, da aufgrund der treppenförmigen oder stufenförmigen Absätze 2 in den Abschnitten 3 bis 6 eine Vielzahl von unterschiedlich großen oder unterschiedlichen Grundflächen aufweisenden Behältern zweckentsprechend abgedeckt werden kann.

## Patentansprüche

1. Kuppelförmig gewölbte, im Grundriß kreisrunde Abdeckhaube für Teller, Schüsseln, Behälter o.dgl., **dadurch gekennzeichnet,** daß im konkav gewölbten inneren Bereich in insgesamt vier Abschnitten (3 bis 6) jeweils um 90° gegeneinander versetzt angeordnete, stufenförmige Absätze (2) gebildet sind, welche in den konkav gewölbten Innenbereich hinein vorstehen und - in der Projektionsebene der Abdeckhaube (1) gesehen - jeweils quadratische Grundflächen zwischen sich einschließen und in ihren jeweiligen mittleren Abschnitten kreisbogenförmige Auswölbungen (7) aufweisen, wobei die Krümmungsradien der Auswölbungen (7) innerhalb der einzelnen Absätze (2) untereinander gleichgroß sind.

2. Abdeckhaube nach Anspruch 1, dadurch gekennzeichnet, daß die Abdeckhaube (1) aus Kunststoff hergestellt ist und die Absätze (2) unter Beibehaltung der Wandstärke der Abdeckhaube (1) im übrigen gefertigt sind.

3. Abdeckhaube nach Anspruch 2, dadurch gekennzeichnet, daß die Abdeckhaube (1) aus einem durchsichtigen Kunststoff hergestellt ist.

4. Abdeckhaube nach Anspruch 2, dadurch gekennzeichnet, daß die Abdeckhaube (1) aus einem undurchsichtigen Kunststoff gefertigt ist.

5. Abdeckhaube nach einem oder mehreren der Ansprüche 1 bis 4, dadurch gekennzeichnet, daß die Abdeckhaube (1) außenseitig und vorzugsweise in ihrem mittleren Bereich mit einer Handhabe (14) ausgestattet ist.

6. Abdeckhaube nach Anspruch 5, dadurch gekennzeichnet, daß die Handhabe (14) einstückig an die Abdeckhaube (1) im übrigen angeformt ist.

7. Abdeckhaube nach einem oder mehreren der Ansprüche 1 bis 6, dadurch gekennzeichnet, daß die mit den Absätzen (2) versehenen Abschnitte (3 bis 6) durch jeweils um 90° gegeneinander versetzt angeordnete, unverformte Abschnitte (10 bis 13) voneinander getrennt sind.

## Claims

1. A cover hood, which is arched in dome shape and which is circular in plan view, for plates, dishes, containers or the like, characterised thereby that formed in the concavely arched inner region and in altogether four sections (3 to 6) are step-shaped shoulders (2), which are displaced by 90° relative to each another and which project into the concavely arched inner region and - seen in the plane of projection of the cover hood (1) - each have square base surfaces between closed-in outward bulges (7) which are circularly arcuate in their respective middle sections, wherein the radii of curvature of the outward bulges (7) are equal to one another within the individual shoulders (2).

2. Cover hood according to claim 1, characterised thereby that the cover hood (1) is made of plastics material and the shoulders (2) are moreover produced with maintenance of the wall thickness of the cover hood (8).

3. Cover hood according to claim 2, characterised thereby that the cover hood (1) is made of a transparent plastics material.

4. Cover hood according to claim 2, characterised thereby that the cover hood (1) is produced from a non-transparent plastics material.

5. Cover hood according to one or more of claims 1 to 4, characterised thereby that the cover hood (1) is equipped with a handle (14) at its outer side and preferably in its central region.

6. Cover hood according to claim 5, characterised thereby that the handle (14) is moreover moulded on integrally at the cover hood (1).

7. Cover hood according to one or more of claims 1 to 6, characterised thereby that the sections (3 to 6) provided with the shoulders (2) are separated from one another by undeformed sections (10 to 13) arranged displaced relative to one another each time by 90°.

## Revendications

1. Couvercle bombé de forme sphérique, de tracé circulaire pour des assiettes, saladiers, récipients ou analogues, caractérisé en ce que dans la zone interne bombé concave sont formés des décrochements en forme de gradins, disposés dans un ensemble de quatre secteurs (3 à 6) décalés respectivement de 90° l'un par rapport à l'autre, décrochements qui font saillie vers l'intérieur de la zone interne bombée concave et - vu dans le plan de projection du couvercle (1) - enferment entre elles des surfaces de base rectangulaires et comportent dans leurs secteurs moyens respectifs des bombements vers l'extérieur (7) en forme d'arc de cercle, les rayons de courbure de ces bombements vers l'extérieur (7) étant de même grandeur entre eux à l'intérieur des décrochements individuels (2).

2. Couvercle selon la revendication 1, caractérisé en ce que le couvercle (1) est fabriqué en matière plastique et les décrochements (2) sont produites tout en maintenant d'ailleurs l'épaisseur de paroi du couvercle (1).

3. Couvercle selon la revendication 2, caractérisé en ce que le couvercle (1) est produit en une matière plastique transparente.

4. Couvercle selon la revendication 2, caractérisé en ce que le couvercle (1) est produit en une matière plastique opaque.

5. Couvercle selon une ou plusieurs des revendications 1 à 4, caractérisé en ce que le couvercle (1) est muni d'une poignée (14) du côté extérieur et de préférence dans sa zone centrale.

6. Couvercle selon la revendication 5, caractérisé en ce que la poignée est formée et appliquée en fait en une pièce sur le couvercle (1).

7. Couvercle selon une ou plusieurs de revendications 1 à 6, caractérisé en ce que les secteurs (3 à 6) munis de décrochements (2) sont disposés décalés respectivement de 90° les uns par rapport aux autres, et sont séparés les uns des autres par des secteurs (10 à 13) non déformés.
